# EUROPÄISCHE PATENTANMELDUNG

(11) **EP 4 230 029 A1**
(43) Veröffentlichungstag der Anmeldung: **23.08.2023**
(21) Anmeldenummer: 22157221.7
(22) Anmeldetag: 17.02.2022
(51) Int. Cl.: A01G 13/02

(54) **KAMMELEMENT UND DARAUS GEBILDETE HÜLLE ALS WUCHSHILFE UND/ODER SCHUTZ FÜR PFLANZEN, SOWIE HÜLLE**

(71) Anmelder: Eschlbeck, Franz, 83209 Prien am Chiemsee (DE)
(72) Erfinder: Eschlbeck, Franz, 83209 Prien am Chiemsee (DE)
(74) Vertreter: Nowack, Linda

(57) **Zusammenfassung**

Vorgeschlagen wird ein Kammelement zur Bildung einer Hülle als Wuchshilfe und/oder Schutz für Pflanzen, wobei das Kammelement gebildet ist aus einem Kammrücken mit einem ersten Endbereich und einem zweiten Endbereich, mehreren aus dem Kammrücken in dieselbe Richtung abstehenden, gleichartig gebildeten Zinken, aufweisend zwei zueinander parallele Längsseiten und eine hintere Seite und eine vordere Seite. Die Zinken sind mit ihren Längsseiten in einem Abstand und parallel zueinander derart angeordnet, dass zwei einander gegenüberliegende Zinken einen Zinkenzwischenraum bilden. Ferner sind die Zinken an ihren hinteren Seiten mit dem Kammrücken verbunden oder daraus gebildet, und bilden an ihrer der hinteren Seite gegenüberliegenden vorderen Seite eine Zinkenspitze. Außerdem sind die Zinken derart gebildet, dass an jeder Längsseite jeweils eine in Richtung Zinkenspitze in einem ersten Winkel zur Zinkenspitze hin abfallende, vordere Einführfase einer vorgegebenen ersten Fasenlänge vorgesehen ist, an der in einer ersten Teillänge ab der Zinkenspitze eine über die Längsseite in Richtung Zinkenzwischenraum ragende vordere Verriegelungsnase mit einer zum Kammrücken weisenden vorderen Verriegelungskante vorgesehen ist. In einem Bereich, an dem die hintere Seite des Zinken mit dem Kammrücken verbunden oder daraus gebildet ist, ist aus jeder Längsseite eine in den Zinkenzwischenraum in einem zweiten Winkel in Richtung Kammrücken aufsteigende hintere Einführfase mit einer hinteren, zum Kammrücken weisenden Verriegelungskante vorgesehen, wobei zwischen hinterer Verriegelungskante und Kammrücken eine Verriegelungsnut vorgesehen ist, deren Breite mindestens der Dicke eines Zinkens entspricht. Ausgehend von der Zinkenspitze ist eine parallel zu den Längsseiten des Zinken in Richtung Kammrücken bis zu einer vorgegebenen zweiten Länge in den Zinken eindringende Zinkennut vorgesehen.

## Beschreibung

Die Erfindung betrifft ein Kammelement und eine daraus gebildete Hülle als Wuchshilfe und/oder Schutz für Pflanzen. Diese ist besonders in der Anwendung in der Land- und Forstwirtschaft vorteilhaft.

Es sind bereits Wuchshilfen und Schutzhüllen für Pflanzen bekannt. Diese werden eingesetzt, um Pflanzen beim Wuchs zu unterstützen, bis sie eine Größe erreicht haben, bei der sie sich selbst tragen können. Zusätzlich dienen solche Hüllen auch als Schutz gegen Tiere, sei es, um ein unerwünschtes Abfressen junger Triebe zu verhindern, oder um die Pflanze vor einem Scheuern des Tieres an der Pflanze, z.B. mit seinem Körper oder Hörnern, zu verhindern. Das nötige Rückbauen der bekannten Wuchshilfen und Schutzhüllen ist allerdings arbeits- und kostenintensiv.

Zum Schutz der Umwelt sind auch bereits Wuchs- und Schutzhüllen bekannt, die aus biologisch abbaubarem Material gebildet sind. Die verwendeten Materialien hierfür sind Kunststoffe, in der Regel Polypropylene (PP), welche durch Mikroorganismen zersetzt werden können. Allerdings müssen diese Materialien aktiv unter Zufuhr von z.B. Enzymen abgebaut werden, d.h. nach einer gewissen Zeit entfernt und zu einem Ort gebracht werden, an dem sie abgebaut werden können, da sie aus gesetzlichen Gründen Abfall im Sinne des Kreislaufwirtschaftsgesetzes sind und deshalb aus dem Wald zu entfernen sind.

Dies ist im kleinen gewerblichen Rahmen und im privaten Bereich mit annehmbarem Zeitaufwand möglich. Aber da solche Wuchshilfen und Schutzhüllen im großen Stil in der Forstwirtschaft eingesetzt werden, ist es nötig, einfach aufzustellende Wuchshilfen und Schutzhüllen bereitzustellen. Besonders vorteilhaft sind diese Wuchshilfen und Schutzhüllen auch noch ohne Hilfsmittel biologisch abbaubar, so dass sie an der Pflanze bleiben und dort nach einer gewissen Zeit vollständig abgebaut werden. Eine solche Wuchshülle ist in der EP3815514 des Anmelders offenbart.

Da es aber immer Bedarf an Verbesserungen gibt, ist es eine Aufgabe dieser Erfindung, eine verbesserte Wuchshilfe und/oder Schutzhülle in Form einer Hülle bereitzustellen, welche diese Kriterien erfüllen. Diese Aufgabe wird erfindungsgemäß durch die Merkmale der unabhängigen Patentansprüche gelöst. Vorteilhafte Ausgestaltungen sind Gegenstand der abhängigen Ansprüche.

Vorgeschlagen wird ein Kammelement zur Bildung einer Hülle als Wuchshilfe und/oder Schutz für Pflanzen, wobei das Kammelement gebildet ist aus einem Kammrücken mit einem ersten Endbereich und einem zweiten Endbereich, mehreren aus dem Kammrücken in dieselbe Richtung abstehenden, gleichartig gebildeten Zinken, aufweisend zwei zueinander parallele Längsseiten und eine hintere Seite und eine vordere Seite. Die Zinken sind mit ihren Längsseiten in einem Abstand und parallel zueinander derart angeordnet, dass zwei einander gegenüberliegende Zinken einen Zinkenzwischenraum bilden. Ferner sind die Zinken an ihren hinteren Seiten mit dem Kammrücken verbunden oder daraus gebildet, und bilden an ihrer der hinteren Seite gegenüberliegenden vorderen Seite eine Zinkenspitze. Außerdem sind die Zinken derart gebildet, dass an jeder Längsseite jeweils eine in Richtung Zinkenspitze in einem ersten Winkel zur Zinkenspitze hin abfallende, vordere Einführfase einer vorgegebenen ersten Fasenlänge vorgesehen ist, an der in einer ersten Teillänge ab der Zinkenspitze eine über die Längsseite in Richtung Zinkenzwischenraum ragende vordere Verriegelungsnase mit einer zum Kammrücken weisenden vorderen Verriegelungskante vorgesehen ist. In einem Bereich, an dem die hintere Seite des Zinken mit dem Kammrücken verbunden oder daraus gebildet ist, ist aus jeder Längsseite eine in den Zinkenzwischenraum in einem zweiten Winkel in Richtung Kammrücken aufsteigende hintere Einführfase mit einer hinteren, zum Kammrücken weisenden Verriegelungskante vorgesehen, wobei zwischen hinterer Verriegelungskante und Kammrücken eine Verriegelungsnut vorgesehen ist, deren Breite mindestens der Dicke eines Zinkens entspricht. Ausgehend von der Zinkenspitze ist eine parallel zu den Längsseiten des Zinken in Richtung Kammrücken bis zu einer vorgegebenen zweiten Länge in den Zinken eindringende Zinkennut vorgesehen.

Durch die vorgeschlagenen Kammelemente kann eine Hülle durch Zusammenstecken von mindestens drei Kammelementen einfacher und ohne eine für ein Zusammenrollen ansonsten benötigte Bewässerung montiert werden. Außerdem kann sie durch entsprechendes Zusammenstecken diagonal gestellt werden und ist damit auch in Hanglage stabil.

Des Weiteren ist vorgesehen, dass ein erster Zinkenabstand als Abstand zwischen Oberkanten der vorderen Verriegelungsnasen desselben Zinken definiert ist, und ein zweiter Zinkenabstand als Abstand zwischen Oberkanten der Verriegelungsnasen zweier einander gegenüberliegender Zinken definiert ist, und ein dritter Zinkenabstand als Länge der Nut am Zinkengrund einander gegenüberliegender Zinken definiert ist, wobei zwischen einer vorgegebenen Anzahl an Zinken gilt: Z2<Z1>Z3.

Des Weiteren ist vorgesehen, dass die vorderen Einführfasen und/oder die hinteren Einführfasen rampenartig gebildet sind, und/oder wobei in einem Bereich, bevor die hinteren Einführfasen ansteigen, jeweils eine Auskerbung in der Längsseite vorgesehen ist.

Des Weiteren ist vorgesehen, dass der erste Winkel zwischen 10° und 45° Grad ist, und/oder der zweite Winkel zwischen 10° und 45° Grad ist.

Des Weiteren ist vorgesehen, dass Kammrücken und Zinken einstückig aus einem auf Holzzellulose basierendem Werkstoffen gebildet sind.

Des Weiteren ist vorgesehen, dass ein Kammelement in einer vorgegebenen Länge derart gebildet ist, dass an einem ersten Endbereich ein erster End-Zinken und der Kammrücken eine gerade Fläche bilden, und an einem zweiten Endbereich der Kammrücken in einem Abstand von einem zweiten End-Zinken herausragt.

Ferner ist ein zweites Kammelement vorgesehen, das gemäß dem beschriebenen Kammelement gebildet ist, und bei dem zusätzlich auf einer den Zinken gegenüberliegenden Seite des Kammrückens je Zinken und direkt gegenüberliegend eine weitere Verriegelungsnut in identischer Weise zur Verriegelungsnut gebildet ist.

Ferner wird eine Hülle vorgeschlagen, die als Wuchshilfe und/oder Schutz für Pflanzen dient, gebildet aus mindestens drei miteinander in Eingriff stehenden Kammelementen, die derart miteinander in Eingriff stehen, dass sie einen geschlossenen Raum mit einem Innenraum und einer Außenseite bilden, wobei jedes Kammelement eine vorgegebene Länge aufweist und derart gebildet ist, dass ein erster End-Zinken mit dem ersten Endbereich des Kammrückens bündig endet, und ein zweiter End-Zinken in einem Abstand von dem zweiten Endbereich endet, und wobei bei einer geraden Zahl an miteinander in Eingriff stehenden Kammelementen nach Montage benachbarte Kammelemente zueinander um 180 Grad derart gedreht sind, dass jeweils ein zweiter End-Zinken eines Kammelements in einem Zinkenzwischenraum im ersten Endbereich des damit verbundenen Kammelements in Eingriff steht. Bei einer ungeraden Zahl an miteinander in Eingriff stehenden Kammelementen sind nach Montage eine gerade Anzahl an benachbarten Kammelementen zueinander um 180 Grad derart gedreht, dass jeweils ein zweiter End-Zinken eines Kammelements in einem Zinkenzwischenraum im ersten Endbereich des damit verbundenen Kammelements in Eingriff steht, wobei als Abschlusselement ein zweites Kammelement vorgesehen ist.

Des Weiteren ist vorgesehen, dass ferner ein Vlies vorgesehen ist, das auf der Außenseite und/oder im Innenraum der Hülle oder abwechselnd im Innenraum und der Außenseite jedes Kammelements angeordnet ist.

Des Weiteren ist vorgesehen, dass das Vlies als Vlies-Strumpf derart gebildet ist, dass es innerhalb der Hülle eingebracht ist oder außen auf die Hülle aufgebracht ist, oder wobei das Vlies separat an jedem Kammelement angeordnet ist.

Des Weiteren ist vorgesehen, dass das Vlies aus biologisch abbaubarem Material gebildet ist und/oder wobei das Vlies mindestens an einer Oberseite jedes die Hülle bildenden Kammelements befestigt ist.

Des Weiteren ist vorgesehen, dass an mindestens einer durch zwei Kammelemente gebildeten Ecke ein Stabilisierungselement innerhalb der Hülle vorgesehen ist.

Des Weiteren ist vorgesehen, dass zur Verwendung der Hülle in ebenen Flächen alle Kammelemente dieselbe Länge aufweisen, oder zur Verwendung der Hülle in Hanglage die Kammelemente gleiche oder unterschiedliche Längen aufweisen.

Ferner ist eine Verwendung einer beschriebenen Hülle als Wuchshilfe und/oder Schutzhülle für Pflanzen vorgesehen.

Vorgeschlagen wird ferner ein Montageverfahren einer beschriebenen Hülle, wobei zum Montieren der Hülle die Kammelemente derart miteinander durch seitliches oder frontales miteinander in Eingriff bringen verbunden werden, dass die Zinken eines Kammelements in die Verriegelungsnut eines damit zu verbindenden Kammelements eingebracht werden und die Hülle einen geschlossenen Raum mit einem Innenraum und einer Außenseite bildet.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert.
- Fig. 1: zeigt ein einzelnes Kammelement 100 gemäß einer Ausführung der vorliegenden Erfindung.
- Fig. 2: zeigt einen vergrößerten Ausschnitt A1 eines Teils eines Kammelements der in Figur 1 gezeigten Ausführung.
- Fig. 3: zeigt in Figur 2 gezeigte Teile des Kammelements zur seitlichen Verriegelung.
- Fig. 4: zeigt in Figur 2 gezeigte Teile des Kammelements zur frontalen Verriegelung.
- Fig. 5: zeigt in Figur 2 gezeigte Teile des Kammelements in Verriegelung.
- Fig. 6: zeigt ein einzelnes Kammelement 101 gemäß einer weiteren Ausführung der vorliegenden Erfindung.
- Fig. 7: zeigt einen vergrößerten Ausschnitt A2 eines Teils eines Kammelements der in Figur 6 gezeigten Ausführung.
- Fig. 8: zeigt eine Ansicht auf eine aus vier in Figur 1 gezeigten Kammelementen 100 gebildete Hülle 200 gemäß einer Ausführung der Erfindung.
- Fig. 9: zeigt eine Ansicht auf eine aus zwei in Figur 1 gezeigten Kammelementen 100 und aus einem in Figur 6 gezeigten Kammelement 101 gebildete Hülle 200 gemäß einer Ausführung der Erfindung.
- Fig. 10: zeigt die in Hanglage aufgestellte und in Fig. 9 gezeigte Hülle
- Fig. 11: zeigt die in Fig. 9 gezeigte Hülle mit im Inneren angeordnetem Vlies
- Fig. 12: zeigt die in Fig. 9 gezeigte Hülle mit auf der Außenseite angeordnetem Vlies
- Fig. 13: zeigt die in Fig. 9 gezeigte Hülle mit einem abwechselnd zwischen Innen und Außenseite angeordnetem Vlies.
- Fig. 14: zeigt eine Draufsicht auf eine aus sechs in Figur 1 gezeigten Kammelementen 100 gebildete Hülle 200 gemäß einer Ausführung der Erfindung.

In den nachfolgenden Figurenbeschreibungen sind gleiche Elemente bzw. Funktionen mit gleichen Bezugszeichen versehen.

Die vorgeschlagene, aus mehreren gleichartigen Kammelementen 100, 101 gebildete Hülle 200 kann in unterschiedlichsten Bereichen eingesetzt werden, wird aber vorteilhaft in der Land- und Forstwirtschaft als Wuchshilfe und/oder Schutzhülle für Pflanzen verwendet, da sie aus vollständig ohne Hilfsmittel verrottbarem Material hergestellt werden kann.

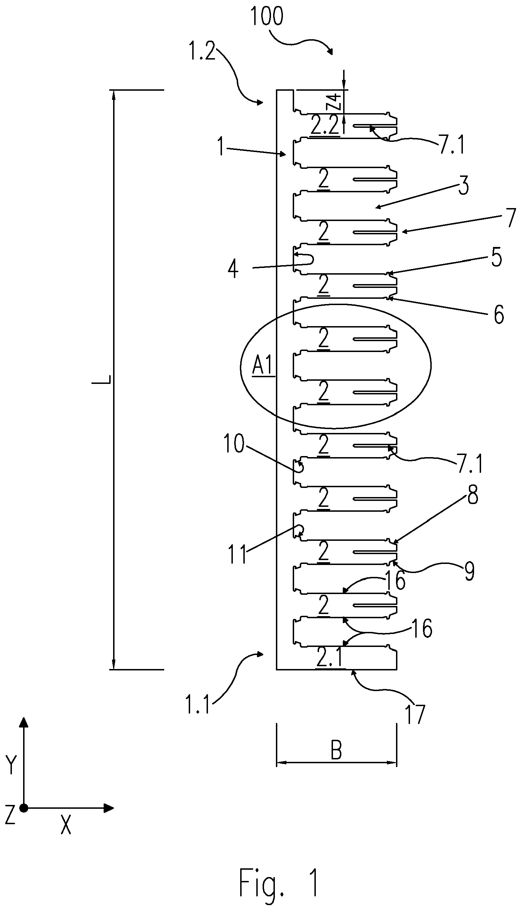

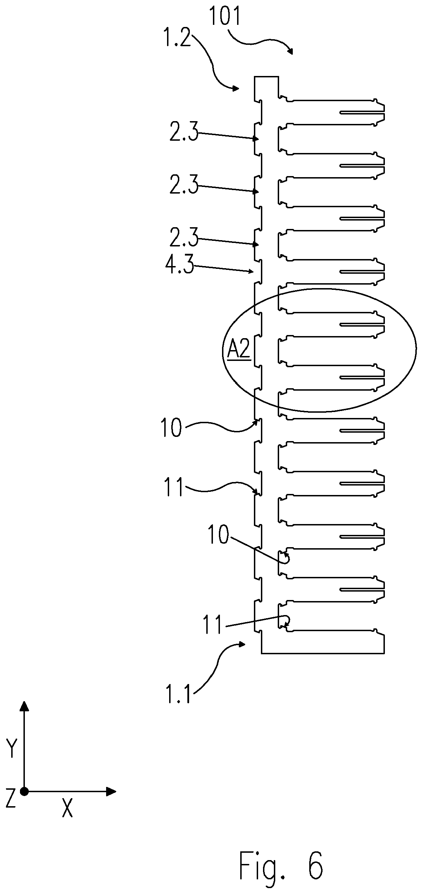

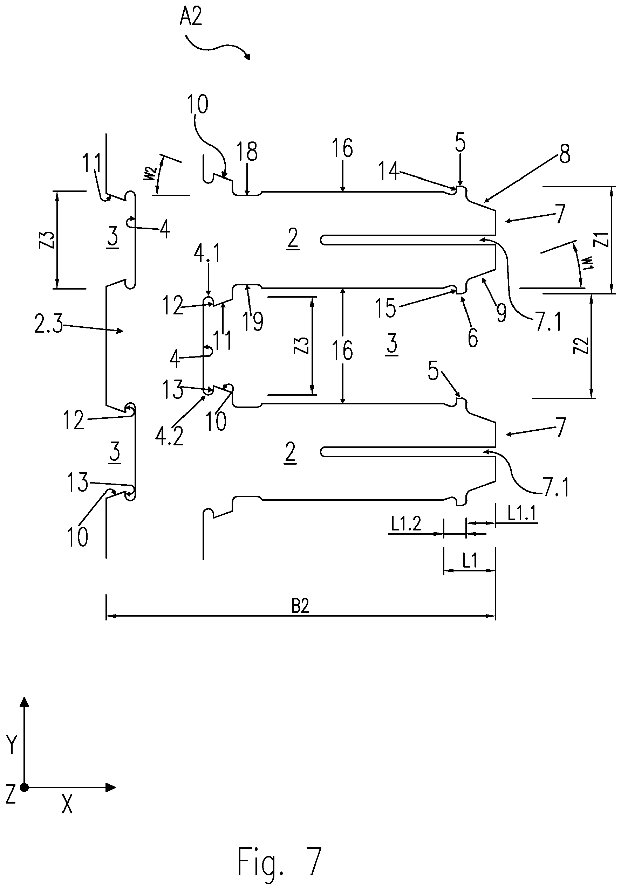

Aus einer geraden Anzahl (ab vier Stück) an in Figur 1 gezeigten Kammelementen 100 kann eine einfach aufzustellende Wuchshilfe und/oder Schutzhülle für Pflanzen in Form einer Hülle 200 bereitgestellt werden, indem deren Zinken 2 und Zinkenzwischenräume 3 miteinander in Eingriff gebracht werden. Um eine ungerade Anzahl an Kammelementen 100 miteinander zu einer Hülle 200 zu verbinden, muss ein wie in Figuren 6 und 7 (Fig. 7 zeigt Ausschnitt A2 aus Figur 6) dargestelltes Kammelement 101 als letztes Kammelement verwendet werden, um die Hülle 200 zu schließen. Das heißt, dass jeweils eine gerade Zahl an Kammelementen 100 wie in Figur 1 gezeigt plus ein Kammelement 101 wie in Figur 6 gezeigt verwendet werden.

Das grundsätzliche Prinzip der Konstruktion des Kammelements 100 wird nachfolgend beschrieben. Dieses ist für alle gezeigten Ausführungen und Figuren dasselbe.

Um eine vollständige Hülle 200 aufzubauen, welche eine Pflanze umhüllt und damit als Wuchshilfe und/oder Schutz vor Tieren dient, werden stets mindestens drei Kammelemente 100, 101 miteinander in Eingriff gebracht, so dass eine selbsthemmende Verriegelung durch die Verriegelungsnasen 5,6, die hinteren und vorderen Einführfasen 8-11 und die Verriegelungsnut 4 entsteht. Es müssen also keine zusätzlichen Verschlusselemente vorgesehen sein, um die Hülle 200 in der gewünschten Form zu halten.

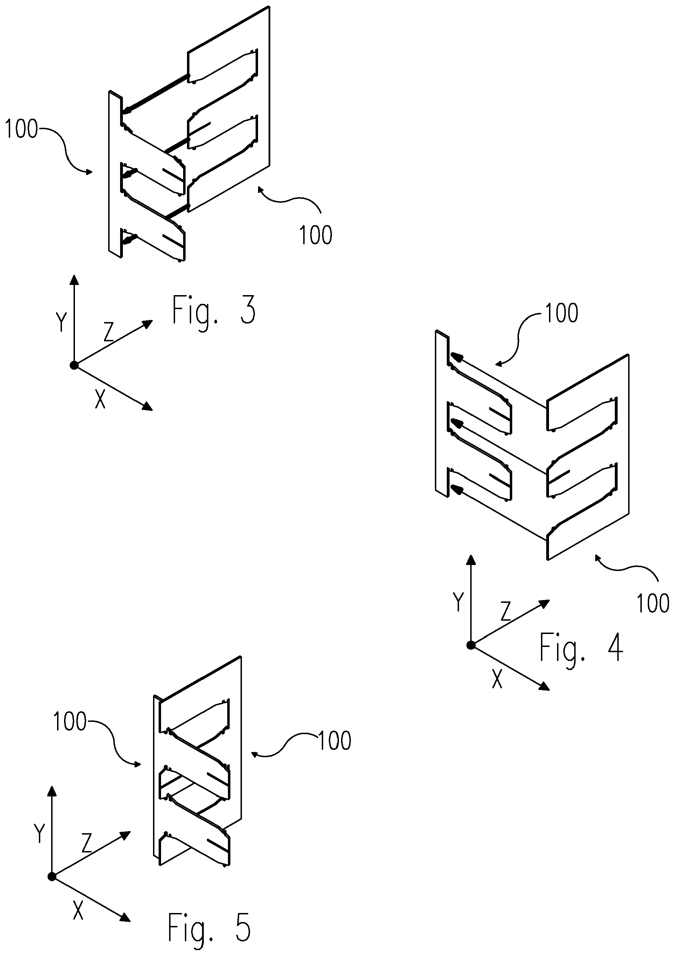

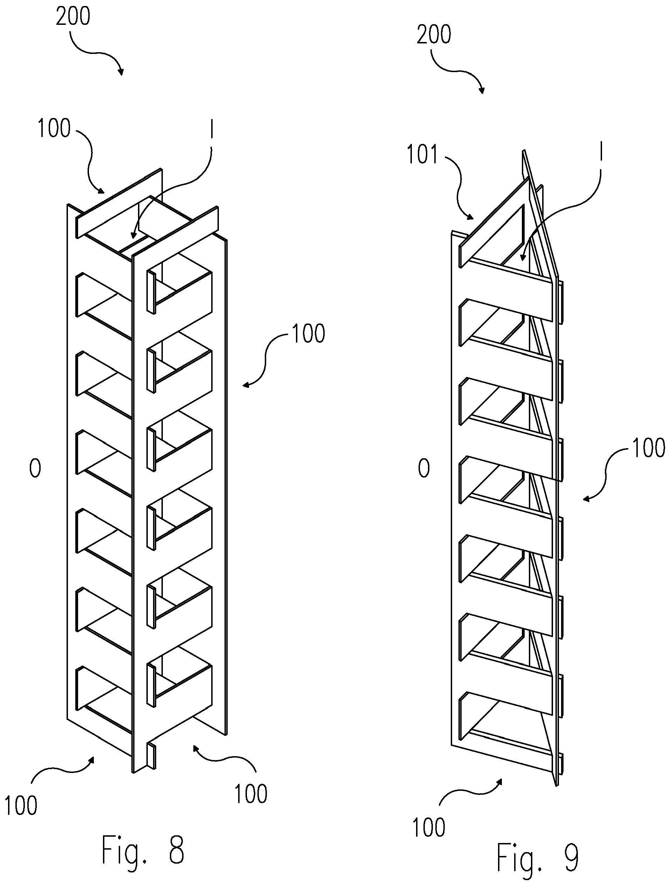

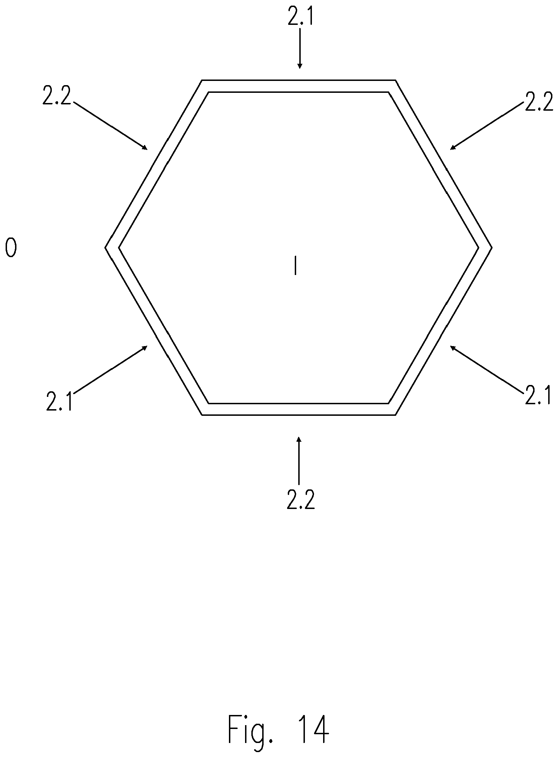

Die Form der als Wuchshilfe und/oder Schutzhülle dienenden Hülle 200 aus Kammelementen 100, 101 kann je nach Ausführung unterschiedlich gewählt werden, wie nachfolgend in Zusammenhang mit Figuren beschrieben. In Figur 8 ist eine schematische Ansicht einer Hülle 200 aus vier Kammelementen 100 gezeigt und in Figur 9 ist eine schematische Ansicht einer Hülle 200 aus drei Kammelementen 100, 101 (2x 100 und 1×101) gezeigt, wobei hier die Details der Verriegelungen nicht dargestellt sind. Diese sind z.B. in Figuren 3 bis 5 im Detail gezeigt. In Figur 14 ist eine Draufsicht auf eine Hülle 200 aus sechs Kammelementen 100 gezeigt.

Das Material der Hülle 200 ist so zu wählen, dass es eine gewisse Flexibilität aufweist. Es kann also sowohl Kunststoff als auch ein anderes Material gewählt werden. Um der Anforderung zu genügen, an der Pflanze ohne weitere Hilfsmittel und ohne weiteres Zutun zu verrotten, sind die Kammelemente 100, 101 und auch zusätzliche (nachfolgend beschriebene) Stabilisierungselemente aus einem oder mehreren auf Holzzellulose basierendem Werkstoffen gebildet, welche vorteilhaft eine Materialdicke zwischen 1mm und 10mm aufweisen. Solche Werkstoffe sind z.B. Holz, Holzfurnier, verholzte Pflanzen, Schälfurniere. Wichtig ist, dass das Material ein verrottbares Material ist, d.h. ein Material, das sich direkt vor Ort zersetzt, also ohne weitere Zusätze oder Kompostierhilfen. Durch die Verwendung von auf Holzzellulose basierenden Werkstoffen ist keine manuelle Entsorgung mehr nötig, was sowohl Zeit als auch Kosten spart. Außerdem ist ein geringer bis kein Pflegeaufwand nötig. Dennoch hat das Material eine hohe Widerstandsfähigkeit und Nutzungsdauer. Der Zerfallszeitraum beträgt mindestens 4 Jahre, je nach Material und Dicke des Materials.

Durch die Möglichkeit der Verwendung von nachwachsendem Rohstoff wird auch die Umwelt geschont. Auch sind auf Holzzellulose basierende Werkstoffe noch umweltverträglicher als kompostierbare Kunststoffe.

Das Kammelement 100, 101 weist eine Länge L und eine Breite B auf, wie in Figur 1 gezeigt. Die Länge L ist dabei Länge des Kammelements 100, 101 in Y-Richtung. Die Breite B entspricht der Länge eines Zinken 2 von seiner Zinkenspitze 7 bis zur Verriegelungsnut 4 am Kammgrund plus der Breite des Kammrückens 1 (in X-Richtung).

Die Länge L der Hülle 200 kann für alle Arten von Pflanzen passend gewählt werden, indem sie in der entsprechenden Länge L abgeschnitten wird. Außerdem kann durch Anpassen der Länge der Zinken 2 die Größe der durch die Hülle 200 eingeschlossenen Fläche, also der Innenraum I der Hülle 200, und durch die Anzahl der Kammelemente 100, 101 die Form bestimmt werden.

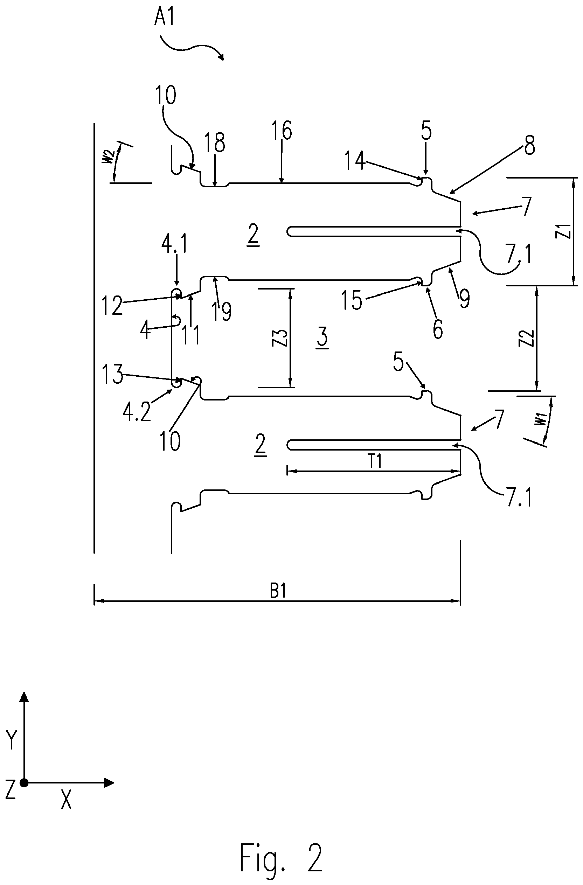

Nachfolgend wird der Aufbau eines in Figur 1 gezeigten Kammelements 100 unter Bezugnahme auf die Figuren 1 und 2 im Detail beschrieben. Figur 2 zeigt einen vergrößerten Ausschnitt A1 eines Teils eines Kammelements 100 aus Figur 1.

Das Kammelement 100 ist einstückig gebildet und weist einen Kammrücken 1 und mehrere daraus in dieselbe Richtung herausragende Zinken 2 auf. Alle Zinken 2 sind gleichartig gebildet, so dass sie in senkrecht zum Kammrücken verlaufender X-Achse achssymmetrisch ist. Lediglich bei einem auf eine bestimmte Länge gekürzten Kammelement 100 endet ein erster äußerster End-Zinken 2.1 mit einem ersten Endbereich 1.1 des Kammrückens 1 bündig (um eine ebene Fläche zu bilden), und ein zweiter äußerster End-Zinken 2.2 endet in einem Abstand zu einem zweiten Endbereich 1.2 des Kammrückens 1. Dies ist allerdings der Tatsache geschuldet, dass der ursprüngliche Zinken 2 zusammen mit dem Kammrücken 1 bzw. nur der Kammrücken 1 im Zinkenzwischenraum 3 in X-Richtung durchgeschnitten wurde.

### Zinken

Jeder Zinken 2 weist zwei zueinander parallele Längsseiten 16 auf. Ebenso ist eine hintere Seite jedes Zinken 2 die Seite, welche aus dem Kammrücken 1 herausragt und damit den Kammgrund bildet, an dem sich eine Verriegelungsnut 4 (in Richtung Materialdicke bzw. Y-Achse) befindet. Die vordere Seite liegt der hinteren Seite gegenüber und bildet die Zinkenspitze 7 des Kammelements 100. Die Zinkenspitze 7 ist vorteilhaft nicht spitz, sondern stumpf. Dies hat den Vorteil, dass die Spitze bei der Montage nicht abbrechen kann und/oder eine Verletzungsgefahr z.B. beim Transport darstellt.

Zwei einander gegenüberliegende Zinken 2, also in Y-Richtung nebeneinander angeordnete bzw. benachbarte Zinken 2, weisen einen Zinkenzwischenraum 3 auf. In diesen Zinkenzwischenraum 3 wird bei Montage jeweils ein Zinken 2 eines weiteren Kammelements 100 entweder seitlich, also in senkrecht zur X-Achse liegender Z-Achse (Figur 3) oder frontal, also entlang der X-Achse, von Seite der Zinkenspitze 7 aus (Figur 4) eingeschoben. Hierbei dienen die Verriegelungsnasen 5, 6 dazu, mit der am Kammgrund zwischen Kammrücken 1 und hinterer Verriegelungskante 12, 13 der hinteren Einführfase 10, 11 vorgesehenen Verriegelungsnut 4 verriegelt zu werden, nachdem sie über die vorderen Einführfasen 8, 9 in den Zinkenzwischenraum 3 eingebracht wurden, wie in Figur 5 gezeigt.

### Vorderseite Zinken

Jeder Zinken 2 ist derart gebildet, dass an jeder Längsseite 16 davon jeweils eine in Richtung Zinkenspitze 7 in einem ersten Winkel W1, der vorteilhaft zwischen 10° und 45° Grad ist, zur Zinkenspitze 7 hin abfallende vordere Einführfase 8, 9 vorgesehen ist. Das heißt, dass die Breite (Abstand zwischen seinen Längsseiten 16 in Y-Richtung) des Zinkens 2 zu seiner Zinkenspitze 7 hin abnimmt. Die Einführfase 8, 9 fällt vorzugsweise rampenartig in Richtung Zinkenspitze 7 ab und weist eine Fasenlänge L1 (nur in Figur 7 dargestellt) auf. Die Fasenlänge L1 und der Winkel W1 sind so gewählt, dass ein seitliches oder frontales Einschieben möglich ist. In einer ersten Teillänge L1.1 der Fasenlänge L1 ab der Zinkenspitze 7 ist eine über die Längsseite 16 in Richtung Zinkenzwischenraum 3 ragende vordere Verriegelungsnase 5, 6 mit einer zum Kammrücken 1 weisenden vorderen Verriegelungskante 14, 15 vorgesehen. Die Verriegelungskante 14, 15 fällt vorzugsweise senkrecht ab. Die erste Teillänge L1.1 (nur in Figur 7 dargestellt) ist material- und anwendungsabhängig so gewählt, dass die Verriegelungsnase 5, 6 nach Montage nicht abbrechen kann. Die zweite Teillänge L1.2 (nur in Figur 7 dargestellt), also die Länge der restlichen Rampe ab der Verriegelungskante 14, 15 bis zum Ende der Rampe, dient als Begrenzung vor einem Durchrutschen des Zinken 2.

Ausgehend von der Zinkenspitze 7 in Richtung Kammrücken 1 ist eine Zinkennut 7.1 vorgesehen. Diese reicht parallel zu den Längsseiten 16 von der Zinkenspitze 7 (welche dadurch ein offenes Ende aufweist) bis mindestens zur Hälfte der Länge des Zinken 2 in den Zinken 2 hinein und teilt damit den Zinken 2 in zwei Teil-Zinken. Die Zinkennut 7.1 kann bis zu zwei Drittel in den Zinken 2 hineinragen. Die Länge T1 der Zinkennut 7.1 ist dabei so zu wählen, dass die beiden durch die Zinkennut 7.1 gebildeten Teil-Zinken bei Montage so weit zusammengedrückt werden können, dass über den Zinkenzwischenraum 3 und die hintere Einführfase 10, 11 (frontales Montieren, siehe Figur 4) oder direkt (seitliches Montieren, siehe Figur 3) in die Verriegelungsnut 4 am Kammgrund eingeschoben werden können. Die Breite (in Y-Richtung) der Zinkennut 7.1 hängt vom Verfahren ab, mit dem das Kammelement 100 hergestellt wird und ist vorteilhaft größer als Z2-Z3 (Definition siehe weiter unten).

### Rückseite Zinken

Jeder Zinken 2 ist ferner derart gebildet, dass in einem Kammgrund, an dem die hintere Seite des Zinken 2 mit dem Kammrücken 1 verbunden oder daraus gebildet ist, eine Verriegelungsnut 4 vorgesehen ist, deren Breite (in X-Richtung) mindestens der Materialdicke der Hülle 200 und damit der Dicke eines Zinkens 2 (in Z-Richtung) entspricht, damit dieser dort nach Montage in Eingriff stehen kann. An die Verriegelungsnut 4 (in X-Richtung) anschließend ist aus jeder Längsseite 16 eine hintere Einführfase 10, 11 vorgesehen. Diese ist vorteilhaft rampenartig derart gebildet, dass sie in den Zinkenzwischenraum 3 ragt und direkt an die Verriegelungsnut 4 (in X-Richtung) anschließend eine zum Kammrücken 1 weisende Verriegelungskante 12, 13 aufweist, die dort möglichst senkrecht abfällt. Der Abstand zwischen Verriegelungskante 12, 13 und Kammgrund ist die Breite der Verriegelungsnut 4. Die hintere Einführfase 10, 11 steigt aus Richtung Zinkenspitze 7.1 in einem zweiten Winkel W2 auf, der vorteilhaft zwischen 10° und 45°Grad ist, und endet an der zum Kammrücken 1 weisenden Verriegelungskante 12, 13.

In einer Ausführung kann in einem Bereich, bevor die Einführfase 10, 11 aufsteigt, eine Auskerbung 18, 19 in der Längsseite 16 vorgesehen sein. Diese dient unter anderem dazu, eine höhere Elastizität des Zinken 2 bereitzustellen.

### Hülle 200

Um eine Hülle 200 zu bilden, welche als Wuchshilfe und/oder Schutz für Pflanzen verwendet werden kann, werden mindestens drei Kammelemente 100, 101 miteinander wie nachfolgend beschrieben in Eingriff gebracht.

Jedes Kammelement 100, 101 weist eine Länge L auf, die der gewünschten Länge der Hülle 200 entspricht, indem es auf die entsprechende Länge L geschnitten oder in der entsprechenden Länge L produziert und bereitgestellt wird.

Jedes Kammelement 100, 101 ist derart gebildet, dass eine Längsseite 17 eines ersten End-Zinken 2.1 mit einem ersten Endbereich 1.1 des Kammrückens 1 bündig endet (siehe Figur 1) und ein zweiter, dem ersten End-Zinken 2.1 in Längsrichtung (Y-Achse) gegenüberliegender End-Zinken 2.2 in einem Abstand Z4 von dem zweiten Endbereich 1.2 des Kammrückens endet, der dem ersten Endbereich in Längsrichtung (Y-Achse) gegenüberliegt, wie in Figur 1 gezeigt. Die Länge L des Kammelements 100, 101 entspricht also dem Abstand zwischen dem ersten Endbereich 1.1 und dem zweiten Endbereich 1.2.

Um eine Hülle 200 zu bilden, werden mindestens drei Kammelemente 100, 101 miteinander in Eingriff gebracht, wobei jeweils eine Verriegelungsnase 5, 6 eines ersten Kammelements 100, 101 mit einer Verriegelungsnut 4 eines weiteren Kammelements 100, 101 in Eingriff gebracht wird. Dies kann durch seitliches Aufschieben, wie in Figur 3 gezeigt, oder frontales Aufschieben, wie in Figur 4 gezeigt, erfolgen. Dabei werden die vorderen Bereiche der Zinken 2 zusammengedrückt, was aufgrund der Zinkennut 7.1 überhaupt erst möglich ist, und in den Zinkenzwischenraum 3 eingeführt, bis die Verriegelungsnasen 5, 6 mit der Verriegelungsnut 4, genauer den Endbereichen 4.1 bzw. 4.2 davon in Eingriff stehen. Dabei bilden die hintere Verriegelungskante 12, 13 und der Kammgrund eine Sperre gegen ein Herausrutschen in X-Richtung und die vordere Verriegelungskante 14, 15 und die in Richtung Kammrücken 1 ansteigende Rampe der vorderen Einführfase 8, 9 eine Sperre gegen ein Herausrutschen in Z-Richtung.

Im Falle, dass die Hülle 200 aus einer geraden Anzahl an Kammelementen 100 gebildet wird, sind die Kammelemente 100 abwechselnd um 180 Grad gedreht, so dass abwechselnd der erste End-Zinken 2.1 und der zweite End-Zinken 2.2 in dieselbe Richtung weisen.

Im Falle, dass die Hülle 200 aus einer ungeraden Anzahl an Kammelementen 100, 101 gebildet wird, muss eines der Kammelemente 101 eine Sonderform aufweisen, um die Hülle 20 schließen zu können. Da benachbarte Kammelemente 100 stets um 180 Grad zueinander gedreht sind und damit abwechselnd der erste Endbereich 1.1 und der zweite Endbereich 1.2 in eine Richtung weist, können im Falle einer ungeraden Anzahl an Kammelementen 100 die letzten beiden nicht ohne weiteres miteinander in Eingriff gebracht werden, was für den Fachmann spätestens bei der Montage offensichtlich wird. Aus diesem Grund muss ein Kammelement 101 als Abschlusselement verwendet werden, das auf der den Zinken 2 gegenüberliegenden Seite des Kammrückens 1 Eingriffsmöglichkeiten für Zinken 2 des damit zu verbindenden Kammelements 100 aufweist.

Grundsätzlich ist dieses als Abschlusselement dienende Kammelement 101 genau wie die Kammelemente 100 gebildet. Es weist lediglich auf der den Zinken 2 gegenüberliegenden Seite des Kammrückens 1 weitere Verriegelungsnuten 4.3 mit hinterer Einführfase 10, 11 und hinterer Verriegelungskante 12, 13 auf, die genau wie die Verriegelungsnut 4 gebildet sind, sowie Zinkenstumpen 2.3, um die Verriegelungsnut 4.3 zu bilden. Die Zinkenstumpen 2.3 befinde sich auf Höhe der Verriegelungsnut 4 und die weiteren Verriegelungsnuten 4.3 auf Höhe der Zinken 2. Somit können die zum als Abschlusselement dienenden Kammelement 101 benachbarten, mit ihren Endbereichen 1.1 und 1.2 in dieselbe Richtung weisenden Kammelemente 100 damit in Eingriff gebracht werden, um eine Hülle 200 zu bilden.

Wie in Figur 7 (zeigt Ausschnitt A2 aus Figur 6) genauer zu sehen ist, ist die Verriegelungsnut 4.3 in den Kammrücken 1 eingeschnitten, so dass eine Ausnehmung von in etwa der Länge (in Y-Richtung) des Zinkenzwischenraums 3 entsteht. Dort wird der Zinken 2 des damit in Eingriff zu bringenden Kammelements 100 eingebracht (wie ansonsten in die Verriegelungsnut 4 auf der anderen Seite des Kammrückens 1). Durch die hintere Verriegelungskante 12, 13 verriegelt der Zinken 2 dann wie bei den Kammelementen 100.

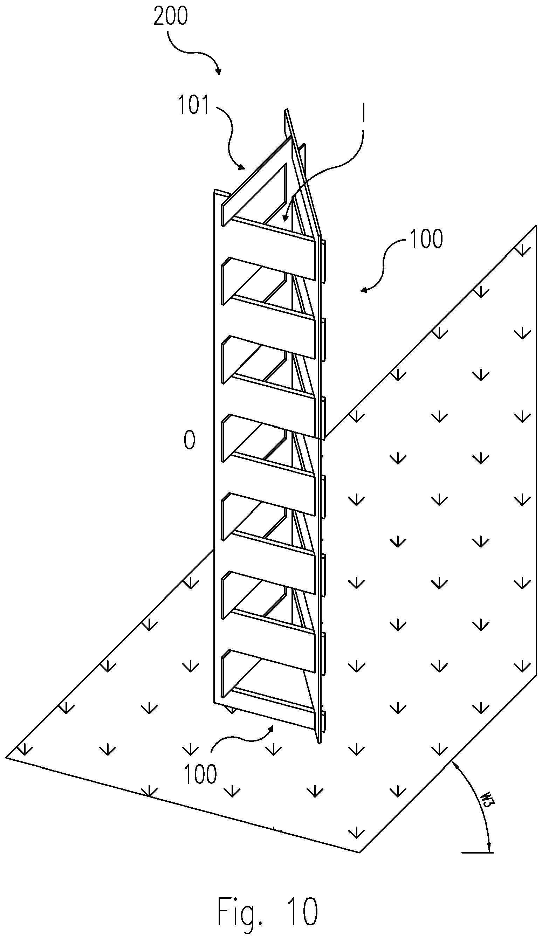

Die Hülle 200 kann, wie in Figur 10 dargestellt, auf einer schrägen Fläche (Hang) mit einem Steigungswinkel W3 von bis zu 25 Grad ausgebracht werden. Im Falle einer Hülle 200 mit einer geraden Anzahl an Kammelementen 100 ist es möglich, dass die Kammelemente 100 nicht dieselbe Anzahl an Zinken 2 aufweisen. Vielmehr sind je nach Steilheit der schrägen Fläche ein oder mehrere Zinkenzwischenräume 3, beginnend vom ersten End-Zinken 2.1, freigelassen, so dass eine schräge Grundfläche entsteht, welche möglichst der Steigung des Hangs entspricht. Es kann auch vorgesehen sein, dass hangaufwärts angeordnete Kammelemente 100 nicht dieselbe Länge L aufweisen wie das hangabwärts angeordnete Kammelement 100.

Im Falle einer Hülle 200 mit drei Kammelementen 100, 101 kann diese so am Hang angeordnet werden, dass sie mit der Spitze des Dreiecks hangaufwärts zeigt, wie in Figur 10 gezeigt. Dabei ist es vorteilhaft, wenn der erste End-Zinken 2.1, also der mit dem Kammrücken bündige Zinken, des Kammelements 100, das hangabwärts gerichtet ist, in Richtung Boden weist. Die beiden anderen Kammelemente 100 und 101 sind dann so ausgerichtet, dass ihr zweiter End-Zinken 2.2 zum Boden weist. Vorteilhaft dabei ist, dass der zweite Endbereich dadurch bis zum End-Zinken 2.2 in den Boden eingesteckt werden kann und damit die Hülle 200 automatisch auch am Hang gerade steht. Außerdem ist die dreieckige Form besonders gut geeignet, um vom Hang kommendem Schnee zu widerstehen bzw. diesen um die Hülle 200 herum abzuleiten.

In einer weiteren Ausführung können ein oder mehrere Stabilisierungselemente beispielsweise in Form von Haltepfosten in mindestens einer der Ecken der Hülle 200 vorgesehen sein, um die Stabilität der Hülle 200 weiter zu erhöhen.

In allen Ausführungen mit einer geraden Zahl an Kammelementen 100 sind die Kammelemente 100 jeweils so angeordnet, dass abwechselnd ein erster Endbereich 1.1 und ein zweiter Endbereich 1.2 nach oben (vom Boden weg) bzw. unten (in Richtung Boden) weist. Das heißt, dass jedes zweite Kammelement 100 um 180 Grad im Vergleich zum benachbarten Kammelement 100 gedreht ist und jeweils der erste Endbereich 1.1 eines Kammelements 100 mit dem zweiten Endbereich 1.2 des damit verbundenen Kammelements 100 in Eingriff steht, wie in Figur 5 gezeigt. Somit ist ein stabiler Stand gewährleistet. In der Ausführung, in der eine ungerade Anzahl an Kammelementen 100, 101 vorgesehen sind, wird lediglich das letzte Kammelement 101 (welches die ungerade Zahl verursacht) wie oben beschrieben gebildet.

Die Hülle 200 bildet somit einen geschlossenen Raum mit einem Innenraum I und einer Außenseite O, wie in Figuren 8, 9 und 14 in drei unterschiedlichen Ausführungen gezeigt. In Figur 9 sind drei Kammelemente 100, 101 miteinander verbunden, in Figur 8 sind vier Kammelemente 100 miteinander verbunden, und in Figur 14 sind sechs Kammelemente 100 miteinander verbunden.

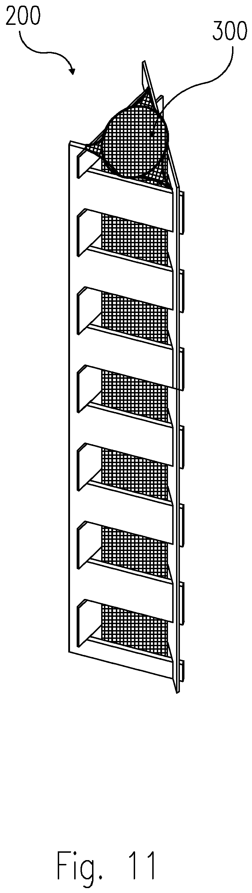

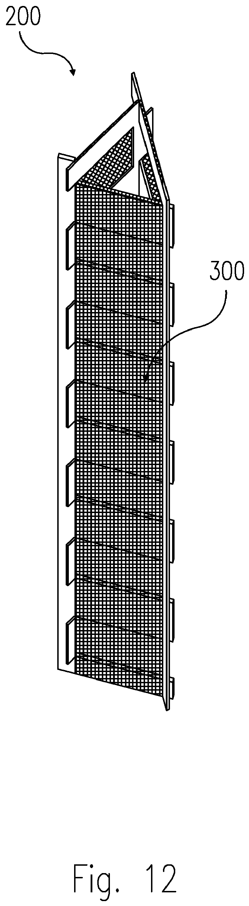

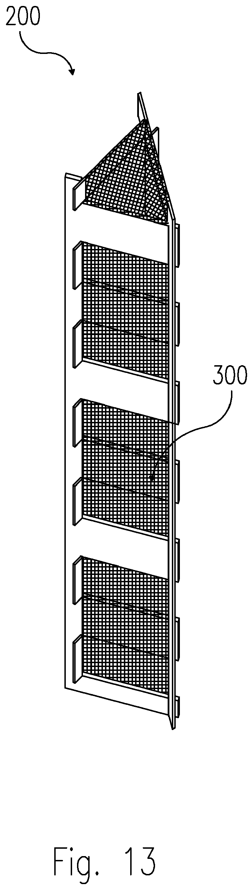

In einer weiteren Ausführung ist ein Vlies 300 vorgesehen, welches im Inneren der Hülle 200, wie in Figur 11 dargestellt, und/oder am Außenbereich der Hülle 200, wie in Figur 12 dargestellt, vorgesehen ist. Vorteilhaft ist das Vlies 300 als ein Vlies-Strumpf gebildet, da dieser in den Innenraum I der Hülle 200 gestellt werden kann oder über die Außenseite O aufgezogen werden kann. Das Vlies 300 kann aber auch je Kammelement 100, 101 an dessen Zinken 2 angeordnet und vorteilhafterweise befestigt sein. Eine Befestigung ist dabei nicht unbedingt nötig, kann aber zumindest an der Oberseite der Hülle 200 vorgesehen werden, um ein Herunterrutschen zu verhindern. Die Befestigung ist vorteilhaft aus vollständig ohne Hilfsmittel biologisch abbaubarem Material. Alternativ kann das Vlies 300 auch je Kammelement 100, 101 abwechselnd im Innenraum I und auf der Außenseite O vorgesehen sein, wie in Figur 13 dargestellt. Das heißt, dass es jeweils über einen oder mehrere Zinken 2 geführt wird, um dann über den Zinkenzwischenraum 3 auf die andere Seite des Kammelements 100 (innen bzw. außen) geführt zu werden. Hier ist ebenfalls nicht unbedingt eine Befestigung nötig, kann aber vorgesehen werden, insbesondere am oberen Bereich, um ein Verrutschen vom Vlies 300 zu vermeiden, aber auch um den Transport vorgefertigter Kammelement-Vlies-Systeme zu erleichtern.

### Maße

Nachfolgend werden Maße und Relationen angegeben, die für unterschiedliche Ausführungen relevant sein können.

Die Breite der Zinken 2 (in Y-Richtung) beträgt vorteilhaft zwischen 20mm und 100mm.

Die Dicke der Zinken 2 (in Z-Richtung) beträgt vorteilhaft zwischen 1mm und 10mm.

Die Länge der Zinken (in X-Richtung) ist variabel wählbar und wird so gewählt, dass je nach Form der Hülle 200 eine gewünschte Größe des Innenraums I der Hülle 200 entsteht.

Die Breite B des Kammrückens 1 (in X-Richtung) ist derart zu wählen, dass er eine benötigte Stabilität aufweist. Vorteilhaft ist er mindestens 40 mm breit.

Die Länge L des Kammrückens 1 (in Y-Richtung) bestimmt die Höhe der Hülle 200 und kann je nach Bedarf gewählt werden, indem die Kammelemente 100, 101 entsprechend auseinandergeschnitten werden.

Zinkenabstände:
- Z1: Ein erster Zinkenabstand Z1 ist als Abstand zwischen Oberkanten der vorderen Verriegelungsnasen 5, 6 desselben Zinken 2 definiert.
- Z2: Ein zweiter Zinkenabstand Z2 ist als Abstand zwischen Oberkanten der Verriegelungsnasen 5, 6 zweier einander gegenüberliegender Zinken 2 definiert.
- Z3: Ein dritter Zinkenabstand Z3 ist als Länge der Verriegelungsnut 4, 4.3 (genauer dem Abstand zwischen deren Endbereichen 4.1 und 4.2) einander gegenüberliegender Zinken 2 definiert.

Es gilt: Z2<Z1>Z3.

Z4: Ein Abstand Z4 ist als Abstand eines zweiter End-Zinken 2.2 vom Endbereich 1.2 des Kammrückens 1. Vorteilhaft entspricht Z4 der Hälfte oder weniger als der Hälfte des Zinkenzwischenraums 3.

In einer bevorzugten Ausführungsform sind Zinken 2 und Zinkenzwischenraum 3 regelmäßig angeordnet. Es ist aber auch möglich, ein oder mehrere Zinken 2 nicht auszubilden und eine Lücke zwischen zwei benachbarten Zinken 2 zu belassen, die größer als ein Zinkenzwischenraum 3 ist, solange die Stabilität der Hülle 200 nicht gefährdet ist. Somit würde dann nur eine vorgegebene Anzahl an Zinken 2 die Bedingung Z2<Z1>Z3 erfüllen.

### Bezuaszeichenliste

- 1: Kammrücken
- 1.1, 1.2: Erster bzw. zweiter Endbereich des Kammrückens
- 2: Zinken
- 2.1: Erster End-Zinken
- 2.2: Zweiter End-Zinken
- 2.3: Zinkenstumpen
- 3: Zinkenzwischenraum
- 4.1, 4.2: Endbereiche Verriegelungsnut
- 4; 4.3: Verriegelungsnut am Zinkengrund von 100 bzw. 101
- 5, 6: Verriegelungsnase
- 7: Zinkenspitze
- 7.1: Zinkennut an der Zinkenspitze
- 8, 9: Vordere Einführfase
- 14, 15: Vordere Verriegelungskante
- 10, 11: Hintere Einführfase
- 12, 13: Hintere Verriegelungskante
- 16: Längsseiten Zinken
- 17: Längsseite erster End-Zinken
- 100: Kammelement
- 200: Hülle
- 300: Vlies
- A1, A2: vergrößerter Ausschnitt
- W1, W2: Erster bzw. zweiter Winkel
- W3: Steigungswinkel
- Z1: Zinkenbreite an der Zinkenspitze
- Z2: Zinkenabstand an den Zinkenspitzen
- Z3: Zinkenabstand am Zinkengrund
- Z4: Abstand zweiter End-Zinken 2.2 von Endbereich 1.2
- L: Länge Kammelement
- B: Breite Kammelement
- L1: Fasenlänge Einführfase
- L1.1: Erste Teillänge
- L1.2: Zweite Teillänge
- T1: Länge Zinkennut
- I; O: Innenraum Hülle 200; Außenseite Hülle 200

## Patentansprüche

1. Kammelement (100) zur Bildung einer Hülle (200) als Wuchshilfe und/oder Schutz für Pflanzen, wobei das Kammelement (100) gebildet ist aus:
a. Einem Kammrücken (1) mit einem ersten Endbereich (1.1) und einem zweiten Endbereich (1.2),
b. mehreren aus dem Kammrücken (1) in dieselbe Richtung abstehenden, gleichartig gebildeten Zinken (2), aufweisend zwei zueinander parallele Längsseiten (16) und eine hintere Seite und eine vordere Seite, wobei
i. die Zinken (2) mit ihren Längsseiten (16) in einem Abstand und parallel zueinander derart angeordnet sind, dass zwei einander gegenüberliegende Zinken (2) einen Zinkenzwischenraum (3) bilden, und wobei
ii. die Zinken (2) an ihren hinteren Seiten mit dem Kammrücken (1) verbunden oder daraus gebildet sind, und an ihrer der hinteren Seite gegenüberliegenden vorderen Seite eine Zinkenspitze (7) bilden, und
iii. die Zinken (2) derart gebildet sind, dass
• an jeder Längsseite (16) jeweils eine in Richtung Zinkenspitze (7) in einem ersten Winkel (W1) zur Zinkenspitze (7) hin abfallende, vordere Einführfase (8, 9) einer vorgegebenen ersten Fasenlänge (L1) vorgesehen ist, an der in einer ersten Teillänge (L1.1) ab der Zinkenspitze (7) eine über die Längsseite (16) in Richtung Zinkenzwischenraum (3) ragende vordere Verriegelungsnase (5, 6) mit einer zum Kammrücken (1) weisenden vorderen Verriegelungskante (14, 15) vorgesehen ist, und
• in einem Bereich, an dem die hintere Seite des Zinken (2) mit dem Kammrücken (1) verbunden oder daraus gebildet ist, aus jeder Längsseite (16) eine in den Zinkenzwischenraum (3) in einem zweiten Winkel (W2) in Richtung Kammrücken (1) aufsteigende hintere Einführfase (10, 11) mit einer hinteren, zum Kammrücken (1) weisenden Verriegelungskante (12, 13) vorgesehen ist, wobei zwischen hinterer Verriegelungskante (12, 13) und Kammrücken (1) eine Verriegelungsnut (4) vorgesehen ist, deren Breite mindestens der Dicke eines Zinkens (2) entspricht, und
• ausgehend von der Zinkenspitze (7) eine parallel zu den Längsseiten (16) des Zinken (2) in Richtung Kammrücken (1) bis zu einer vorgegebenen zweiten Länge (T1) in den Zinken (2) eindringende Zinkennut (7.1) vorgesehen ist.

2. Kammelement (100) nach Anspruch 1, wobei
- ein erster Zinkenabstand (Z1) als Abstand zwischen Oberkanten der vorderen Verriegelungsnasen (5, 6) desselben Zinken (2) definiert ist, und
- ein zweiter Zinkenabstand (Z2) als Abstand zwischen Oberkanten der Verriegelungsnasen (5, 6) zweier einander gegenüberliegender Zinken (2) definiert ist, und
- ein dritter Zinkenabstand (Z3) als Länge der Nut am Zinkengrund (4) einander gegenüberliegender Zinken (2) definiert ist, wobei zwischen einer vorgegebenen Anzahl an Zinken (2) gilt: Z2<Z1>Z3

3. Kammelement (100) nach einem der vorhergehenden Ansprüche, wobei die vorderen Einführfasen (8, 9) und/oder die hinteren Einführfasen (10, 11) rampenartig gebildet sind, und/oder wobei in einem Bereich, bevor die hinteren Einführfasen (10, 11) ansteigen, jeweils eine Auskerbung (18, 19) in der Längsseite (16) vorgesehen ist.

4. Kammelement (100) nach einem der vorhergehenden Ansprüche, wobei der erste Winkel (W1) zwischen 10° und 45° Grad ist, und/oder der zweite Winkel (W2) zwischen 10° und 45° Grad ist.

5. Kammelement (100) nach einem der vorhergehenden Ansprüche, wobei Kammrücken (1) und Zinken (2) einstückig aus einem auf Holzzellulose basierendem Werkstoffen gebildet sind.

6. Kammelement (100) nach einem der vorhergehenden Ansprüche, wobei ein Kammelement (100) in einer vorgegebenen Länge derart gebildet ist, dass an einem ersten Endbereich (1.1) ein erster End-Zinken (2.1) und der Kammrücken (1) eine gerade Fläche bilden, und an einem zweiten Endbereich (1.2) der Kammrücken (1) in einem Abstand (Z4) von einem zweiten End-Zinken (2.2) herausragt.

7. Zweites Kammelement (101), das gebildet ist gemäß dem Kammelement (100) nach einem der vorhergehenden Ansprüche, und bei dem zusätzlich auf einer den Zinken (2) gegenüberliegenden Seite des Kammrückens (1) je Zinken (2) und direkt gegenüberliegend eine weitere Verriegelungsnut (4.3) in identischer Weise zur Verriegelungsnut (4) gebildet ist.

8. Hülle (200), die als Wuchshilfe und/oder Schutz für Pflanzen dient, gebildet aus mindestens drei miteinander in Eingriff stehenden Kammelementen (100, 101) nach einem der Ansprüche 1 bis 7, die derart miteinander in Eingriff stehen, dass sie einen geschlossenen Raum mit einem Innenraum (I) und einer Außenseite (O) bilden, wobei jedes Kammelement (100, 101) eine vorgegebene Länge (L) aufweist und derart gebildet ist, dass ein erster End-Zinken (2.1) mit dem ersten Endbereich (1.1) des Kammrückens (1) bündig endet, und ein zweiter End-Zinken (2.2) in einem Abstand (Z4) von dem zweiten Endbereich (1.2) endet, und
wobei
- bei einer geraden Zahl an miteinander in Eingriff stehenden Kammelementen (100) nach Montage benachbarte Kammelemente (100) zueinander um 180 Grad derart gedreht sind, dass jeweils ein zweiter End-Zinken (2.2) eines Kammelements (100) in einem Zinkenzwischenraum (3) im ersten Endbereich (1.2) des damit verbundenen Kammelements (100) in Eingriff steht, und
- bei einer ungeraden Zahl an miteinander in Eingriff stehenden Kammelementen (100) nach Montage eine gerade Anzahl an benachbarten Kammelementen (100) zueinander um 180 Grad derart gedreht sind, dass jeweils ein zweiter End-Zinken (2.2) eines Kammelements (100) in einem Zinkenzwischenraum (3) im ersten Endbereich (1.2) des damit verbundenen Kammelements (100) in Eingriff steht, wobei als Abschlusselement ein zweites Kammelement (101) nach Anspruch 7 vorgesehen ist.

9. Hülle (200) nach Anspruch 8, wobei ferner ein Vlies (300) vorgesehen ist, das auf der Außenseite und/oder im Innenraum (I) der Hülle (200) oder abwechselnd im Innenraum (I) und der Außenseite (O) jedes Kammelements (100, 101) angeordnet ist.

10. Hülle (200) nach Anspruch 9, wobei das Vlies (300) als Vlies-Strumpf derart gebildet ist, dass es innerhalb der Hülle (200) eingebracht ist oder außen auf die Hülle (200) aufgebracht ist, oder wobei das Vlies (300) separat an jedem Kammelement (100, 101) angeordnet ist.

11. Hülle (200) nach Anspruch 9 oder 10, wobei das Vlies (300) aus biologisch abbaubarem Material gebildet ist und/oder wobei das Vlies mindestens an einer Oberseite jedes die Hülle (200) bildenden Kammelements (100, 101) befestigt ist.

12. Hülle (200) nach einem der Ansprüche 8 bis 11, wobei an mindestens einer durch zwei Kammelemente (100, 101) gebildeten Ecke ein Stabilisierungselement innerhalb der Hülle (200) vorgesehen ist.

13. Hülle (200) nach einem der Ansprüche 8 bis 12, wobei
- zur Verwendung der Hülle (200) in ebenen Flächen alle Kammelemente (100, 101) dieselbe Länge (L) aufweisen, oder
- zur Verwendung der Hülle (200) in Hanglage die Kammelemente (100, 101) gleiche oder unterschiedliche Längen (L) aufweisen.

14. Verwendung einer Hülle (200) nach einem der Ansprüche 8 bis 13 als Wuchshilfe und/oder Schutzhülle für Pflanzen.

15. Montageverfahren einer Hülle (200) nach einem der Ansprüche 8 bis 13, wobei zum Montieren der Hülle (200) die Kammelemente (100, 101) derart miteinander durch seitliches oder frontales miteinander in Eingriff bringen verbunden werden, dass die Zinken (2) eines Kammelements (100) in die Verriegelungsnut (4; 4.3) eines damit zu verbindenden Kammelements (100) eingebracht werden und die Hülle (200) einen geschlossenen Raum mit einem Innenraum (I) und einer Außenseite (O) bildet.
